# EUROPÄISCHE PATENTSCHRIFT

(11) **EP 3 996 938 B1**
(45) Veröffentlichungstag und Bekanntmachung des Hinweises auf die Patenterteilung: **08.11.2023**
(21) Anmeldenummer: 20737422.4
(22) Anmeldetag: 06.07.2020
(51) Int. Cl.: B60B 35/00, B60T 17/08

(54) **ACHSENKONSTRUKTION MIT ASYMMETRISCH ANGEORDNETEN BREMSZYLINDERN**
AXLE STRUCTURE WITH ASYMMETRICALLY ARRANGED BRAKE CYLINDERS
STRUCTURE D'ESSIEU COMPRENANT DES CYLINDRES DE FREIN DISPOSÉS DE MANIÈRE ASYMÉTRIQUE

(30) Priorität: 13.07.2019 DE 102019004904
(43) Veröffentlichungstag der Anmeldung: 18.05.2022
(73) Patentinhaber: MAN Truck & Bus SE, 80995 München (DE)
(72) Erfinder: SATTLER, Steve, 80995 München (DE); HINTEREDER, Jürgen, 80995 München (DE); HÖRMANN, Robert, 80995 München (DE)
(74) Vertreter: v. Bezold & Partner Patentanwälte - PartG mbB
(86) Internationale Anmeldenummer: PCT/EP2020/068934
(87) Internationale Veröffentlichungsnummer: WO 2021/008911

(56) Entgegenhaltungen:
- EP-A1- 2 674 319
- EP-A2- 1 462 329
- US-A1- 2018 370 565

## Beschreibung

Die Erfindung betrifft eine Achsenkonstruktion für ein Kraftfahrzeug, vorzugsweise ein Nutzfahrzeug, mit vorzugsweise asymmetrisch angeordneten Bremszylindern.

Zum allgemeinen Stand der Technik kann zunächst auf die EP 2 674 319 A1 und die US 2018/370565 A1 verwiesen werden.

Zur Montage an Nutzfahrzeug-Achsen vorgesehene Nutzfahrzeug-Bremsanordnungen mit einem Bremssattel, einem Bremszylinder und einer Bremsscheibe sind in den unterschiedlichsten Ausführungsformen bekannt. Die Anordnung erforderlicher Funktionskomponenten an und benachbart zu den Nutzfahrzeug-Achsen wird vom zur Verfügung stehenden Raum beeinflusst. Dadurch ergeben sich Zwänge hinsichtlich der Anordnung der Funktionskomponenten. Aufgrund des in der Regel nur bedingt zur Verfügung stehenden Raums an den Nutzfahrzeug-Achsen und/oder aufgrund der verwendeten Antriebstechnologie (z. B. Einzelradmotoren, Verbrennungsmotoren, Elektro-Motoren, Hydraulik-Motoren etc.) ist es allerdings oftmals schwierig, Funktionskomponenten an möglichst optimaler Stelle anzuordnen und/oder ein möglichst kompaktes und vorzugsweise individuelles Packaging der Funktionskomponenten zu gewährleisten.

Eine Aufgabe der Erfindung ist es, eine Möglichkeit zu schaffen, die insbesondere ein kompaktes und vorzugsweise individuelles Packaging von Funktionskomponenten an einer Achsenkonstruktion für ein Kraftfahrzeug, vorzugsweise ein Nutzfahrzeug, gewährleisten kann.

Diese Aufgabe kann mit den Merkmalen des Hauptanspruchs gelöst werden. Vorteilhafte Weiterbildungen sind in den Unteransprüchen offenbart oder ergeben sich aus der folgenden Beschreibung bevorzugter Ausführungsformen der Erfindung.

Die Erfindung betrifft eine Achsenkonstruktion für ein Kraftfahrzeug, vorzugsweise ein Nutzfahrzeug, z. B. ein Lastkraftwagen, eine Sattelzugmaschine oder ein Transporter.

Die Achsenkonstruktion dient zweckmäßig zur Montage eines ersten (z. B. rechten) Rads und eines zweiten (z. B. linken) Rads. Das erste Rad und das zweite Rad können z. B. mit Einzel- oder Doppelbereifung (Zwillingsbereifung) ausgeführt sein.

Die Achsenkonstruktion umfasst eine Längsachse (z. B. Mittelachse) und definiert eine vertikale sich entlang der Längsachse erstreckende vertikale Bezugsebene. Die Bezugsebene wird somit durch ihre vertikale Ausrichtung und durch die Längsachse definiert.

Die Achsenkonstruktion umfasst des Weiteren einen ersten Bremszylinder, der eine erste Mittellinie definiert und zum Bremsen des ersten Rads dienen kann, und einen zweiten Bremszylinder, der eine zweite Mittellinie definiert und zum Bremsen des zweiten Rads dienen kann.

Die Achsenkonstruktion zeichnet sich vorzugsweise dadurch aus, dass der erste Bremszylinder zweckmäßig zumindest abschnittsweise auf z. B. der einen Seite der Bezugsebene (und somit insbesondere in Längsrichtung des Kraftahrzeugs z. B. vor der Achsenkonstruktion) angeordnet sein kann und der zweite Bremszylinder zweckmäßig zumindest abschnittsweise auf z. B. der anderen Seite der Bezugsebene (und somit insbesondere in Längsrichtung des Kraftahrzeugs z. B. hinter der Achsenkonstruktion) angeordnet sein kann.

Die "eine Seite der Bezugsebene" (z. B. erste Seite) kann somit vorzugsweise die Seite darstellen, die in Längsrichtung des Kraftahrzeugs vor der Achsenkonstruktion liegt, wobei die "andere Seite der Bezugsebene" (z. B. zweite Seite) somit vorzugsweise die Seite darstellen kann, die in Längsrichtung des Kraftahrzeugs hinter der Achsenkonstruktion liegt, oder umgekehrt.

Es ist somit im Kontext der Erfindung möglich, dass der erste Bremszylinder z. B. in Längsrichtung des Kraftahrzeugs zumindest abschnittsweise vor der Achsenkonstruktion angeordnet ist, wobei der zweite Bremszylinder z. B. in Längsrichtung des Kraftahrzeugs zumindest abschnittsweise hinter der Achsenkonstruktion angeordnet ist, oder umgekehrt.

Es ist möglich, dass die erste Mittellinie sich im Wesentlichen parallel zur Bezugsebene und/oder zur Längsachse erstreckt.

Die erste Mittellinie kann z. B. von der Bezugsebene und/oder von der Längsachse weg geneigt ausgerichtet sein, z. B. so, dass ein Raum zwischen dem ersten Bremszylinder und der Achsenkonstruktion vergrößert werden kann. Auch die zweite Mittellinie kann z. B. derart ausgerichtet sein, so dass z. B. ein Raum zwischen dem zweiten Bremszylinder und der Achsenkonstruktion vergrößert werden kann.

Es ist möglich, dass die erste Mittellinie sich nicht-parallel zur Bezugsebene und/oder zur Längsachse erstreckt.

Die erste Mittellinie kann sich z. B. nicht-rechtwinklig zur Bezugsebene und/oder zur Längsachse erstrecken.

Es ist möglich, dass die zweite Mittellinie sich im Wesentlichen parallel zur Bezugsebene und/oder zur Längsachse erstreckt.

Die zweite Mittellinie kann z. B. zur Bezugsebene und/oder zur Längsachse hin geneigt ausgerichtet sein, z. B. so, dass ein Raum zwischen dem zweiten Bremszylinder und der Achsenkonstruktion verkleinert werden kann. Auch die erste Mittellinie kann z. B. derart ausgerichtet sein, z. B. so, dass ein Raum zwischen dem ersten Bremszylinder und der Achsenkonstruktion verkleinert werden kann.

Es ist möglich, dass die zweite Mittellinie sich nicht-parallel zur Bezugsebene und/oder zur Längsachse erstreckt.

Die zweite Mittellinie kann sich z. B. nicht-rechtwinklig zur Bezugsebene und/oder zur Längsachse erstrecken.

Es ist möglich, dass die erste Mittellinie und die zweite Mittellinie von der Bezugsebene und/oder von der Längsachse weg geneigt ausgerichtet sind.

Alternativ ist es möglich, dass die erste Mittellinie und die zweite Mittellinie zur Bezugsebene und/oder zur Längsachse hin geneigt ausgerichtet sind.

Es ist möglich, dass die Achsenkonstruktion eine weitere vertikale Bezugsebene aufweist, die die Achsenkonstruktion gleichmäßig in einen linken Teil und einen rechten Teil teilt.

Der erste Bremszylinder und der zweite Bremszylinder sind vorzugsweise asymmetrisch angeordnet, z. B. relativ zur Bezugsebene und/oder relativ zur weiteren Bezugsebene.

Es ist möglich, dass die erste Mittellinie und die zweite Mittellinie sich im Wesentlichen parallel zueinander erstrecken. Allerdings ist es ebenfalls möglich, dass die erste Mittellinie und die zweite Mittellinie sich nicht-parallel zueinander erstrecken.

Es ist auch möglich, dass die erste Mittellinie und die zweite Mittellinie um unterschiedlich große Winkel geneigt ausgerichtet sind und somit z. B. unterschiedlich große Neigungswinkel aufweisen, vorzugsweise relativ zur Bezugsebene und/oder zur Längsachse. So kann z. B. die erste Mittellinie rein beispielhaft einen Neigungswinkel von 30° aufweisen, während die zweite Mitteillinie rein beispielhaft einen Neigungswinkel von 20° aufweisen kann.

Der erste Bremszylinder kann z. B. im Wesentlichen vollständig auf der einen Seite der Bezugsebene angeordnet sein. Alternativ oder ergänzend kann der zweite Bremszylinder z. B. im Wesentlichen vollständig auf der anderen Seite der Bezugsebene angeordnet sein.

Die Achsenkonstruktion ist vorzugsweise eine Antriebsachsenkonstruktion und stellt somit insbesondere eine z. B. elektrisch, hydraulisch und/oder verbrennungsmotorisch angetriebene Achsenkonstruktion dar.

Die Achsenkonstruktion kann z. B. ein Achsgetriebe zum Anschließen einer Antriebswelle zum Antreiben des Kraftfahrzeugs aufweisen.

Es ist allerdings auch möglich, dass die Achsenkonstruktion mit Einzelradmotoren (z. B. Einzelradantrieben) ausgestattet ist, insbesondere zum Antreiben des Kraftfahrzeugs.

Die Achsenkonstruktion kann z. B. einen ersten Einzelradmotor (zweckmäßig Einzelradantrieb) zum Antreiben des ersten Rads und einen zweiten Einzelradmotor (zweckmäßig Einzelradantrieb) zum Antreiben des zweiten Rads aufweisen.

Es ist möglich, dass z. B. der erste Einzelradmotor zumindest abschnittsweise oder im Wesentlichen vollständig auf der einen Seite der Bezugsebene (und somit insbesondere in Längsrichtung des Kraftahrzeugs z. B. vor der Achsenkonstruktion) angeordnet ist und/oder der zweite Einzelradmotor zumindest abschnittsweise oder im Wesentlichen vollständig auf der anderen Seite der Bezugsebene (und somit insbesondere in Längsrichtung des Kraftahrzeugs z. B. hinter der Achsenkonstruktion) angeordnet ist.

Die Achsenkonstruktion kann auch z. B. einen ersten Bremssattel und einen zweiten Bremssattel aufweisen.

Der erste Bremssattel ist dem ersten Bremszylinder zugeordnet und dient insbesondere zum Bremsen des ersten Rads. Der zweite Bremssattel ist dem zweiten Bremszylinder zugeordnet und dient insbesondere zum Bremsen des zweiten Rads.

Es ist möglich, dass der erste Bremssattel zumindest abschnittsweise oder im Wesentlichen vollständig auf der einen Seite der Bezugsebene (und somit insbesondere in Längsrichtung des Kraftahrzeugs z. B. vor der Achsenkonstruktion) angeordnet ist und/oder der zweite Bremssattel zumindest abschnittsweise oder im Wesentlichen vollständig auf der anderen Seite der Bezugsebene (und somit insbesondere in Längsrichtung des Kraftahrzeugs z. B. hinter der Achsenkonstruktion) angeordnet ist.

Die erste Mittellinie und/oder die zweite Mittellinie kann sich z. B. im Wesentlichen horizontal oder nicht-horizontal erstrecken.

Es ist möglich, dass die erste Mittellinie, die zweite Mittellinie und/oder die Längsachse sich im Wesentlichen auf der gleichen Höhe erstrecken.

Zu erwähnen ist, dass die Form des ersten Bremszylinders und/oder des zweiten Bremszylinders vorzugsweise im Wesentlichen kreiszylinderförmig sein kann. Die Form ist hierauf aber nicht eingeschränkt ist, sondern kann zweckmäßig auch andere Formen umfassen.

Zu erwähnen ist ferner, dass die Achsenkonstruktion vorzugsweise eine Starrachsenkonstruktion sein kann.

Die Erfindung betrifft auch ein Kraftfahrzeug, vorzugsweise ein Nutzfahrzeug, mit einem Chassis.

Das Chassis kann vorzugsweise aus einer Vielzahl an mittels Anschlussknoten-Paaren (z. B. zwei oberen Anschlussknoten-Paaren und zwei unteren Anschlussknoten-Paaren) lösbar aneinander montierten Chassis-Modulen ausgebildet sein.

Es ist möglich, dass die Chassis-Module z. B. mittels jeweils vier Anschlussknoten-Paaren lösbar aneinander montiert sein können.

An eines der Chassis-Module kann zweckmäßig eine Achsenkonstruktion wie hierin offenbart montiert sein.

Die Chassis-Module können zweckmäßig als Tragstrukturen jeweils z. B. Längsträger, Querträger und/oder Vertikalträger aufweisen. Im Kontext der Erfindung können sich die Längsträger im Wesentlichen in Längsrichtung des Kraftfahrzeugs erstrecken, die Querträger im Wesentlichen in Querrichtung des Kraftfahrzeugs, und/oder die Vertikalträger im Wesentlichen in Vertikalrichtung (Höhenrichtung) des Kraftfahrzeugs.

Die Längs-, Quer- und/oder Vertikalträger können z. B. zumindest abschnittsweise Blech- oder Profilbauteile umfassen, aber auch z. B. im Wesentlichen plattenförmige Tragstrukturen. Bei den Profilbauteilen kann es sich z. B. um geschlossene oder offene Profile handeln, z. B. Hohlprofile oder z. B. im Wesentlichen U-, L-, I- oder hutförmige Profile.

Es ist möglich, dass die einzelnen Chassis-Module z. B. eine 3-dimensionale Tragstruktur aufweisen, z. B. eine Gerippe- und/oder Kastenkonstruktion.

Die Anschlussknoten können z. B. als Guss-, Schmiede- oder Blechbauteil ausgebildet sein.

Die Anschlussknoten-Paare können z. B. über Schraub- oder Klemmverbindungen oder andere lösbare Verbindungstechniken lösbar aneinander montiert sein.

Die Chassis-Module können z. B. vier vordere Anschlussknoten und/oder vorzugsweise vier hintere Anschlussknoten aufweisen.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1 zeigt: eine schematische perspektivische Ansicht einer Achsenkonstruktion gemäß einer ersten Ausführungsform der Erfindung,
- Figur 2 zeigt: eine schematische Seitenansicht der ersten Ausführungsform,
- Figur 3 zeigt: eine Ansicht von oben auf eine Achsenkonstruktion in detaillierterer Darstellung gemäß der ersten Ausführungsform,
- Figur 4 zeigt: eine perspektivische Ansicht der Achsenkonstruktion in detaillierterer Darstellung gemäß der ersten Ausführungsform,
- Figur 5 zeigt: eine schematische Ansicht von oben auf eine Achsenkonstruktion gemäß einer zweiten Ausführungsform der Erfindung,
- Figur 6 zeigt: eine Ansicht von oben auf eine Achsenkonstruktion in detaillierterer Darstellung gemäß der zweiten Ausführungsform,
- Figur 7 zeigt: ein Chassis-Modul zur Montage einer Achsenkonstruktion gemäß einer Ausführungsform der Erfindung, und
- Figur 8 zeigt: ein Kraftfahrzeug-Chassis mit einer Achsenkonstruktion gemäß einer Ausführungsform der Erfindung.

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen.

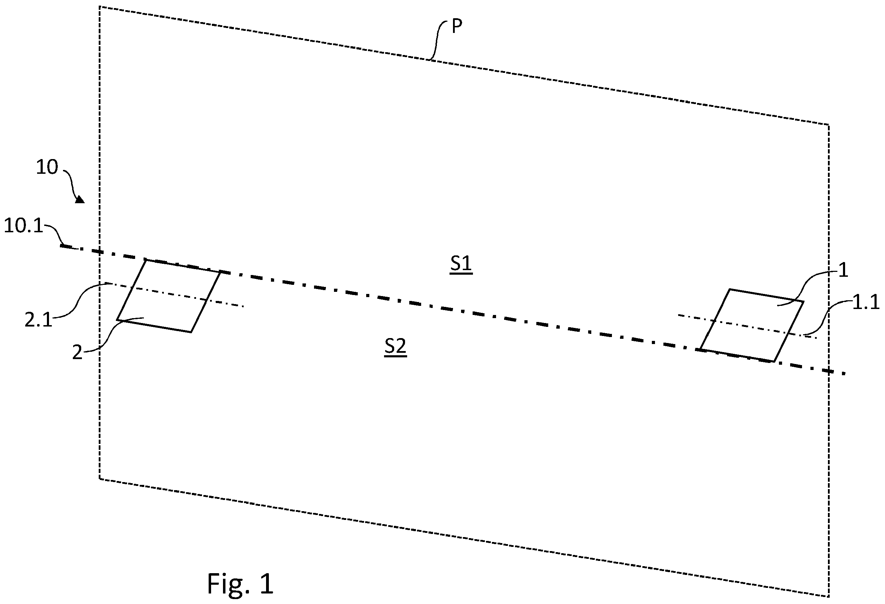

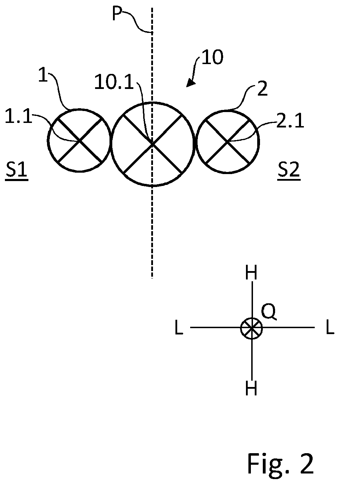

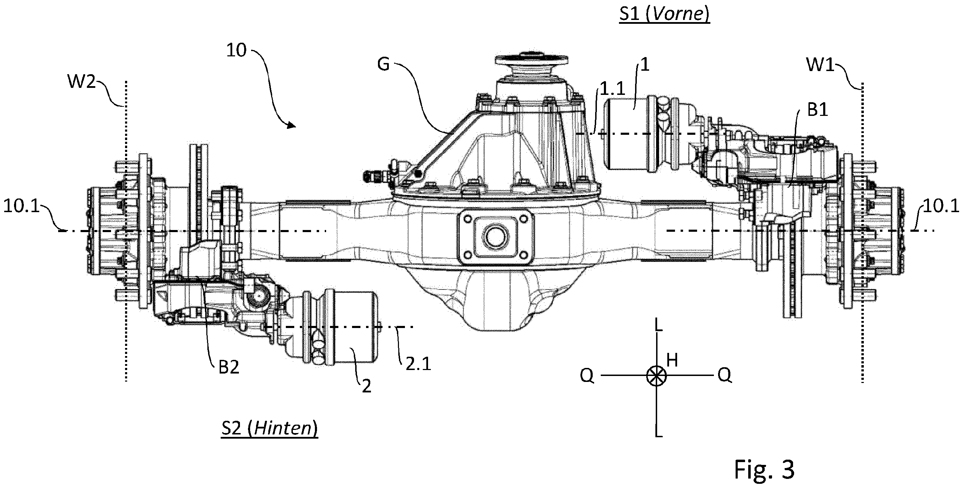

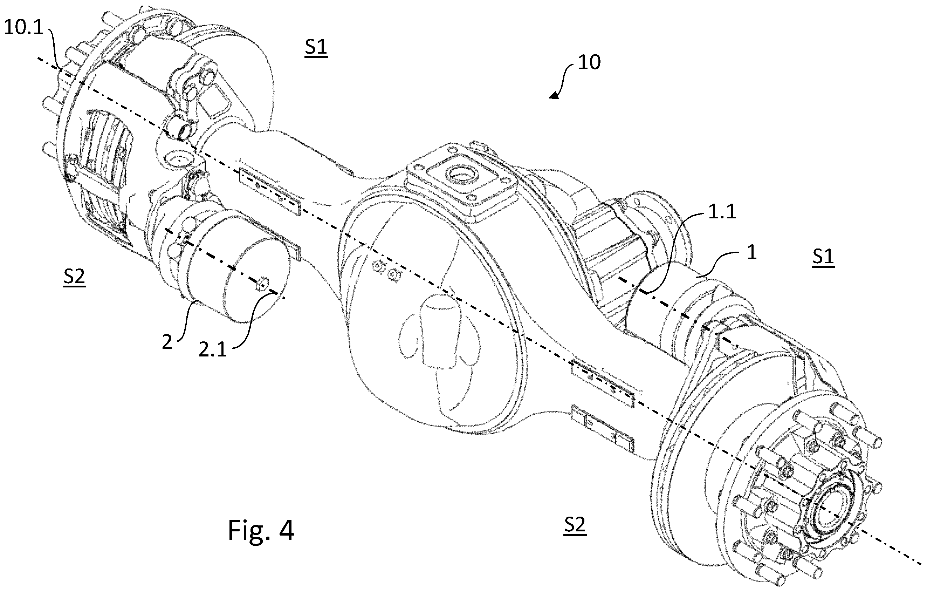

Figur 1 zeigt eine stark schematische perspektivische Ansicht einer Achsenkonstruktion 10 für ein Kraftfahrzeug gemäß einer ersten Ausführungsform der Erfindung, wobei Figur 2 eine stark schematische Seitenansicht der ersten Ausführungsform zeigt. Die Figur 3 zeigt eine Ansicht von oben auf die Achsenkonstruktion 10 in detaillierterer Darstellung, wobei die Figur 4 eine perspektivische Ansicht der Achsenkonstruktion 10 in detaillierterer Darstellung zeigt. Die Achsenkonstruktion 10 der beispielhaften ersten Ausführungsform der Erfindung wird unter gemeinsamer Bezugnahme auf die Figuren 1 bis 4 beschrieben.

Die Achsenkonstruktion 10 dient insbesondere zur Verwendung mit einem Nutzfahrzeug, z. B. einem Lastkraftwagen, und ist somit insbesondere eine Nutzfahrzeug-Achsenkonstruktion 10. Die Achsenkonstruktion 10 dient zunächst wie üblich zur Montage eines ersten (z. B. zweckmäßig rechten) in Figur 3 nur schematisch dargestellten Rads W1 und eines zweiten (zweckmäßig z. B. linken) in Figur 3 nur schematisch dargestellten Rads W2, wobei z. B. Einzel- oder Doppelbereifungen möglich sind.

Bezugszeichen L kennzeichnet die Längsrichtung des Kraftfahrzeugs. Bezugszeichen Q kennzeichnet die Querrichtung des Kraftfahrzeugs. Bezugszeichen H kennzeichnet die Höhenrichtung des Kraftfahrzeugs.

Die Achsenkonstruktion 10 ist mit einem ersten Bremszylinder 1 nebst Bremssattel B1 und einem zweiten Bremszylinder 2 nebst Bremssattel B2 ausgestattet.

Der erste Bremszylinder 1 umfasst eine Mittellinie 1.1 und dient zweckmäßig zum Bremsen des ersten Rads W1, wobei der zweite Bremszylinder 2 eine zweite Mittellinie 2.1 umfasst und zweckmäßig zum Bremsen des zweiten Rads W2 dient.

Ein Achsgetriebe G dient zum Anschließen einer Antriebswelle zum Antreiben des Kraftfahrzeugs, insbesondere des ersten Rads W1 und des zweiten Rads W2.

Eine Besonderheit ist, dass der erste Bremszylinder 1 optional mitsamt seinem Bremssattel B1 auf der einen Seite S1 der Bezugsebene P und somit insbesondere in Längsrichtung L des Kraftahrzeugs z. B. vor der Achsenkonstruktion 10 angeordnet ist und der zweite Bremszylinder 2 optional mitsamt seinem Bremssattel B2 auf der anderen Seite S2 der Bezugsebene P und somit insbesondere in Längsrichtung L des Kraftahrzeugs z. B. hinter der Achsenkonstruktion 10 angeordnet ist.

In der ersten Ausführungsform erstrecken sich die erste Mittellinie 1.1 und die zweite Mittellinie 2.1 im Wesentlichen parallel zur Bezugsebene P und zwar insbesondere im Wesentlichen parallel zur Längsachse 10.1 und somit insbesondere im Wesentlichen horizontal. Im Kontext der Erfindung ist es allerdings nicht zwingend erforderlich, dass sich die erste Mittellinie 1.1 und die zweite Mittellinie 2.1 parallel und/oder horizontal erstrecken, sondern es ist z. B. auch möglich, dass sich die erste Mittellinie 1.1 z. B. parallel zur Längsachse 10.1 erstreckt, wobei sich die zweite Mittellinie 2.1 nicht-parallel zur Längsachse 10.1 und/oder nicht-horizontal (z. B. im Extremfall im Wesentlichen vertikal) erstreckt oder umgekehrt.

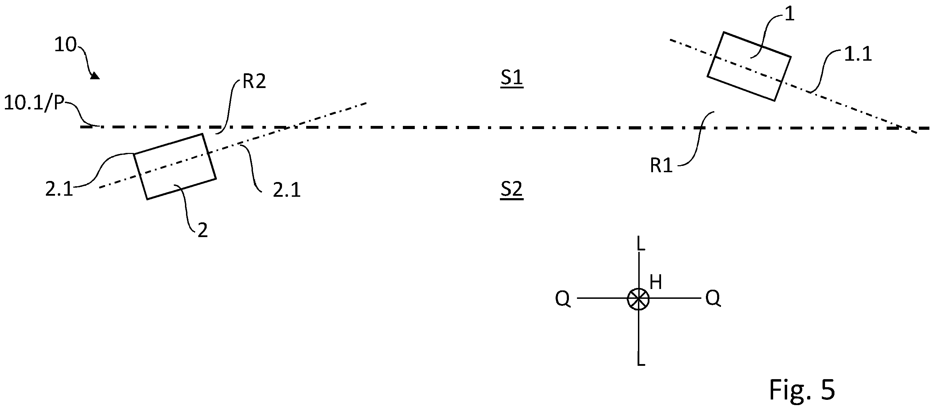

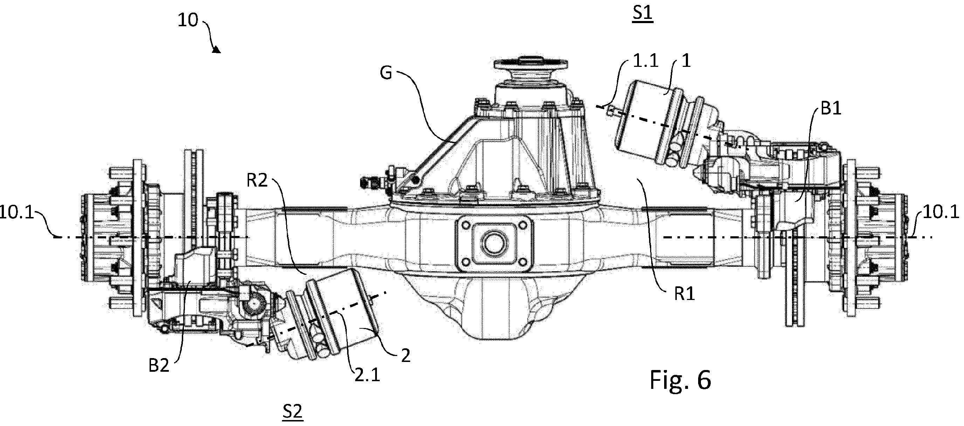

Figur 5 zeigt eine stark schematische Ansicht von oben auf eine Achsenkonstruktion 10 gemäß einer zweiten Ausführungsform, wobei die Figur 6 eine Ansicht von oben auf die Achsenkonstruktion 10 in detaillierterer Darstellung zeigt. Die Achsenkonstruktion 10 der beispielhaften zweiten Ausführungsform wird unter gemeinsamer Bezugnahme auf die Figuren 5 und 6 beschrieben.

Zunächst können sich auch bei der zweiten Ausführungsform die erste Mittellinie 1.1 und die zweite Mittellinie 2.1 im Wesentlichen horizontal erstrecken.

Eine Besonderheit ist aber, dass die erste Mittellinie 1.1 von der Bezugsebene P und/oder von der Längsachse 10.1 weg geneigt ausgerichtet ist, so dass ein Raum R1 zwischen dem ersten Bremszylinder 1 und der Achsenkonstruktion 10 vergrößert werden kann. Die zweite Mittellinie 2.1 hingegen kann zur Bezugsebene P und/oder zur Längsachse 10.1 hin geneigt ausgerichtet sein, so dass ein Raum R2 zwischen dem zweiten Bremszylinder 2 und der Achsenkonstruktion 10 verkleinert werden kann. Dabei ist es möglich, dass der Neigungswinkel der ersten Mittellinie 1.1 und der Neigungswinkel der zweiten Mittellinie 2.1 im Wesentlichen gleich groß oder unterschiedlich groß sind. Bei der zweiten Ausführungsform erstrecken sich somit die erste Mittellinie 1.1 und die zweite Mittellinie 2.1 nicht-parallel zur Bezugsebene P und nicht-parallel zur Längsachse 10.1.

Des Weiteren sind Ausführungsformen möglich, bei denen sowohl die erste Mittellinie 1.1 als auch die zweite Mittellinie 2.1 von der Bezugsebene P und/oder von der Längsachse 10.1 weg geneigt ausgerichtet sind, oder bei denen sowohl die erste Mittellinie 1.1 als auch die zweite Mittellinie 2.1 zur Bezugsebene P und/oder zur Längsachse 10.1 hin geneigt ausgerichtet sind.

Die erste Ausführungsform und die zweite Ausführungsform umfassen vorzugsweise ein Achsgetriebe G zum Anschließen einer Antriebswelle.

Es sind allerdings auch Ausführungsformen mit Einzelradantrieb möglich. So kann die Achsenkonstruktion 10 z. B. einen ersten Einzelradmotor zum Antreiben des ersten Rads W1 und einen zweiten Einzelradmotor zum Antreiben des zweiten Rads W2 aufweisen. Dabei ist es möglich, dass der erste Einzelradmotor zumindest abschnittsweise oder im Wesentlichen insgesamt auf der einen Seite S1 der Bezugsebene P angeordnet ist und/oder der zweite Einzelradmotor zumindest abschnittsweise oder im Wesentlichen insgesamt auf der anderen Seite S2 der Bezugsebene P angeordnet ist.

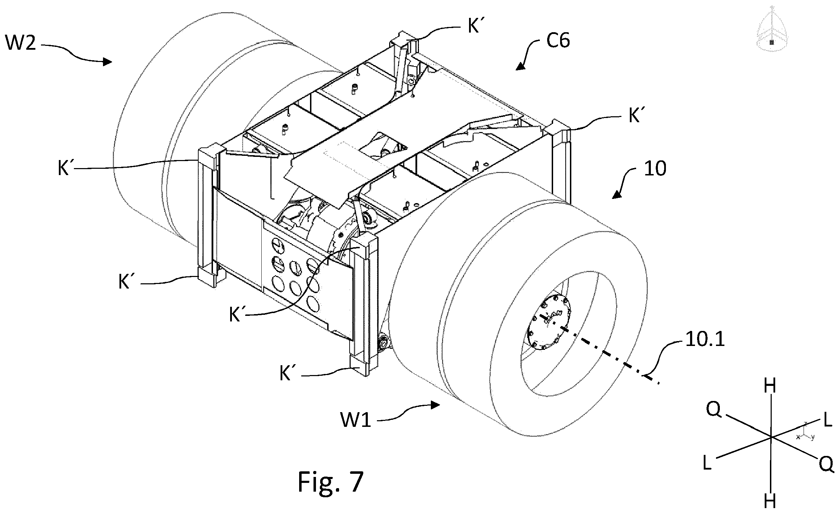

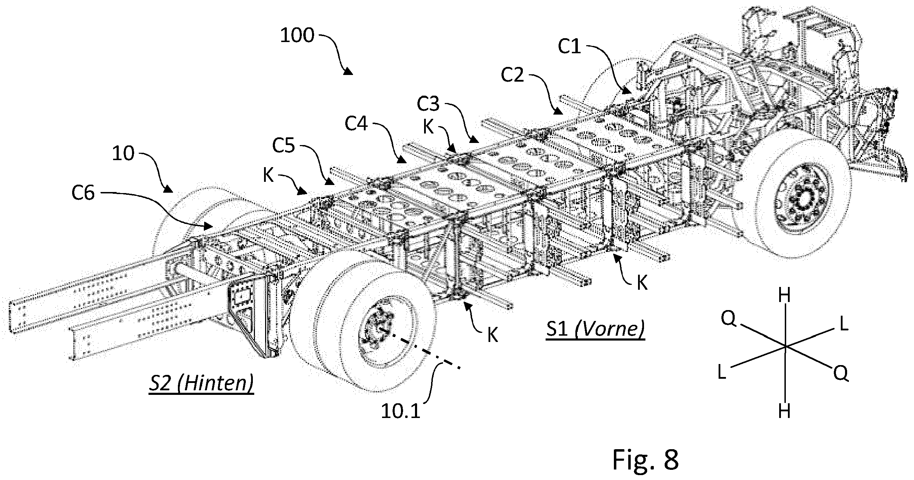

Figur 7 zeigt ein Chassis-Modul C6 zur Montage einer Achsenkonstruktion 10 gemäß einer Ausführungsform der Erfindung, wobei die Figur 8 ein Kraftfahrzeug-Chassis 100 mit einem wie in Figur 7 gezeigten eine Achsenkonstruktion 10 aufweisenden Chassis-Modul C6 und einer Vielzahl weiterer Chassis-Module C1 bis C5 zeigt.

Die einzelnen Chassis-Module C1 bis C6 weisen vorzugsweise vier vordere Anschlussknoten K' (Figur 7) und vier hintere Anschlussknoten K' (Figur 7) auf, wobei die Anschlussknoten K' z. B. als Guss-, Schmiede- oder Blechbauteil ausgebildet sein können. Die einzelnen Anschlussknoten K' der Chassis-Module C1 bis C6 dienen zur Ausbildung von lösbaren Anschlussknoten-Paaren K (Figur 8), über die die Chassis-Module C1 bis C6 lösbar miteinander verbunden sein können, um das Chassis 100 ausbilden zu können. Als lösbare Verbindungstechniken können z. B. Schraub- oder Klemmverbindungen eingesetzt werden.

Das Chassis-Modul C6 ist somit über vorzugsweise vier Anschlussknoten-Paare K lösbar mit dem Chassis-Modul C5 verbunden, wobei das Chassis-Modul C5 über vorzugsweise vier Anschlussknoten-Paare K lösbar mit dem Chassis-Modul C4 verbunden ist usw.

Als Tragstruktur können die einzelnen Chassis-Module C1 bis C6 z. B. mehrere Längsträger, mehrere Querträger und mehrere Vertikalträger aufweisen, die zweckmäßig z. B. als Blech- oder Profilbauteile ausgeführt sein können, aber auch z. B. im Wesentlichen plattenförmige Tragstrukturen umfassen können. Bei den Profilbauteilen kann es sich um geschlossene oder offene Profile handeln, z. B. Hohlprofile oder z. B. im Wesentlichen U-, L-, I- oder hutförmige Profile. Die Tragstruktur der einzelnen Chassis-Module C1 bis C6 ist somit zweckmäßig nicht wie bei z. B. leiterrahmenförmigen Chassis 2-dimensional, sondern vorzugsweise 3-dimensional ausgeführt, z. B als Gerippe- und/oder Kastenkonstruktion, wie z. B. in den Figuren 7 und 8 beispielhaft gezeigt.

Die Erfindung ist nicht auf die oben beschriebenen bevorzugten Ausführungsformen beschränkt. Der Schutzbereich der Erfindung wird durch die beigefügten Ansprüche festgelegt.

### Bezugszeichenliste

- 10: Achsenkonstruktion
- 10.1: Längsachse

- 1: Bremszylinder
- 1.1: Mittellinie
- W1: Rad
- R1: Raum
- B1: Bremssattel

- 2: Bremszylinder
- 2.1: Mittellinie
- W2: Rad
- R2: Raum
- B2: Bremssattel

- P: Bezugsebene
- S1: die eine Seite der Bezugsebene, z. B. Seite vor der Bezugsebene
- S2: die andere Seite der Bezugsebene, z. B. Seite hinter der Bezugsebene

- 100: Chassis
- C1 bis C5: Chassis-Module
- C6: Chassis-Modul zur Montage einer Achsenkonstruktion
- K': Anschlussknoten
- K: Anschlussknoten-Paare

- G: Achsgetriebe

- L: Längsrichtung des Kraftfahrzeugs
- Q: Querrichtung des Kraftfahrzeugs
- H: Höhenrichtung des Kraftfahrzeugs

## Patentansprüche

1. Achsenkonstruktion (10) für ein Kraftfahrzeug, vorzugsweise Nutzfahrzeug, und zur Montage eines ersten Rads (W1) und eines zweiten Rads (W2), wobei die Achsenkonstruktion (10) eine Längsachse (10.1) aufweist und eine vertikale sich entlang der Längsachse (10.1) erstreckende vertikale Bezugsebene (P) definiert, mit:
- einem ersten Bremszylinder (1), der eine erste Mittellinie (1.1) aufweist und vorzugsweise zum Bremsen des ersten Rads (W1) dient, und
- einem zweiten Bremszylinder (2), der eine zweite Mittellinie (2.1) aufweist und vorzugsweise zum Bremsen des zweiten Rads (W2) dient,
**dadurch gekennzeichnet, dass**
- der erste Bremszylinder (1) auf der einen Seite (S1) der Bezugsebene (P) angeordnet ist und der zweite Bremszylinder (2) auf der anderen Seite (S2) der Bezugsebene (P) angeordnet ist.

2. Achsenkonstruktion (10) nach Anspruch 1, **dadurch gekennzeichnet, dass** die erste Mittellinie (1.1) sich im Wesentlichen parallel zur Bezugsebene (P) und/oder zur Längsachse (10.1) erstreckt.

3. Achsenkonstruktion (10) nach Anspruch 1, **dadurch gekennzeichnet, dass** die erste Mittellinie (1.1)
- von der Bezugsebene (P) und/oder von der Längsachse (10.1) weg geneigt ausgerichtet ist, vorzugsweise so, dass ein Raum (R1) zwischen dem ersten Bremszylinder (1) und der Achsenkonstruktion (10) vergrößert wird, und/oder
- sich nicht-parallel zur Bezugsebene (P) und/oder zur Längsachse (10.1) erstreckt.

4. Achsenkonstruktion (10) nach einem der vorhergehenden Ansprüche, **dadurch gekennzeichnet, dass** die zweite Mittellinie (2.1) sich im Wesentlichen parallel zur Bezugsebene (P) und/oder zur Längsachse (10.1) erstreckt.

5. Achsenkonstruktion (10) nach einem der Ansprüche 1 bis 3, **dadurch gekennzeichnet, dass** die zweite Mittellinie (2.1))
- zur Bezugsebene (P) und/oder zur Längsachse (10.1) hin geneigt ausgerichtet ist, vorzugsweise so, dass ein Raum (R2) zwischen dem zweiten Bremszylinder (2) und der Achsenkonstruktion (10) verkleinert wird, und/oder
- sich nicht-parallel zur Bezugsebene (P) und/oder zur Längsachse (10.1) erstreckt.

6. Achsenkonstruktion (10) nach einem der vorhergehenden Ansprüche, **dadurch gekennzeichnet, dass**
- die erste Mittellinie (1.1) und die zweite Mittellinie (2.1) von der Bezugsebene (P) und/oder von der Längsachse (10.1) weg geneigt ausgerichtet sind , oder
- die erste Mittellinie (1.1) und die zweite Mittellinie (2.1) zur Bezugsebene (P) und/oder zur Längsachse (10.1) hin geneigt ausgerichtet sind.

7. Achsenkonstruktion (10) nach einem der vorhergehenden Ansprüche, **dadurch gekennzeichnet, dass** die erste Mittellinie (1.1) und/oder die zweite Mittellinie (2.1) sich nicht-vertikal erstreckt.

8. Achsenkonstruktion (10) nach einem der vorhergehenden Ansprüche, **dadurch gekennzeichnet, dass** erste Bremszylinder (1) und der zweite Bremszylinder (2) asymmetrisch angeordnet sind.

9. Achsenkonstruktion (10) nach einem der vorhergehenden Ansprüche, **dadurch gekennzeichnet, dass** die erste Mittellinie (1.1) und die zweite Mittellinie (2.1)
- sich im Wesentlichen parallel zueinander erstrecken, oder
- sich nicht-parallel zueinander erstrecken und/oder um unterschiedlich große Winkel geneigt ausgerichtet sind.

10. Achsenkonstruktion (10) nach einem der vorhergehenden Ansprüche, **dadurch gekennzeichnet, dass** der erste Bremszylinder (1) im Wesentlichen vollständig auf der einen Seite (S1) der Bezugsebene (P) angeordnet ist und/oder zweite Bremszylinder (2) im Wesentlichen vollständig auf der anderen Seite (S2) der Bezugsebene (P) angeordnet ist.

11. Achsenkonstruktion (10) nach einem der vorhergehenden Ansprüche, **dadurch gekennzeichnet, dass** die Achsenkonstruktion (10) eine Antriebsachsenkonstruktion (10) ist, vorzugsweise eine elektrisch, hydraulisch und/oder verbrennungsmotorisch angetriebene Achsenkonstruktion (10).

12. Achsenkonstruktion (10) nach einem der vorhergehenden Ansprüche, **dadurch gekennzeichnet, dass** die Achsenkonstruktion (10) ein Achsgetriebe (G) zum Anschließen einer Antriebswelle zum Antreiben des Kraftfahrzeugs aufweist.

13. Achsenkonstruktion (10) nach einem der vorhergehenden Ansprüche, **dadurch gekennzeichnet, dass** die Achsenkonstruktion (10) einen ersten Einzelradmotor zum Antreiben des ersten Rads (W1) und einen zweiten Einzelradmotorzum Antreiben des zweiten Rads (W2) aufweist, wobei vorzugsweise der erste Einzelradmotor auf der einen Seite (S1) der Bezugsebene (P) angeordnet ist und/oder der zweite Einzelradmotor auf der anderen Seite (S2) der Bezugsebene (P) angeordnet ist.

14. Achsenkonstruktion (10) nach einem der vorhergehenden Ansprüche, **dadurch gekennzeichnet, dass** dem ersten Bremszylinder (1) ein erster Bremssattel (B1) zugeordnet ist und dem zweiten Bremszylinder (2) ein zweiter Bremssattel (B2) zugeordnet ist und der erste Bremssattel (B1) auf der einen Seite (S1) der Bezugsebene (P) angeordnet ist und der zweite Bremssattel (B2) auf der anderen Seite (S2) der Bezugsebene (P) angeordnet ist.

15. Achsenkonstruktion (10) nach einem der vorhergehenden Ansprüche, **dadurch gekennzeichnet, dass** die erste Mittellinie (1.1) und/oder die zweite Mittellinie (2.1) sich im Wesentlichen horizontal erstreckt oder nicht-horizontal erstreckt.

16. Achsenkonstruktion (10) nach einem der vorhergehenden Ansprüche, **dadurch gekennzeichnet, dass** die erste Mittellinie (1.1), die zweite Mittellinie (2.1) und/oder die Längsachse (10.1) sich im Wesentlichen auf der gleichen Höhe erstrecken.

17. Kraftfahrzeug, vorzugsweise Nutzfahrzeug, mit einem Chassis (100) aus einer Vielzahl an mittels vorzugsweise jeweils vier Anschlussknoten-Paaren (K) lösbar aneinander montierten Chassis-Modulen (C1, C2, C3, C4, C5, C6), wobei eine Achsenkonstruktion (10) nach einem der vorhergehenden Ansprüche an ein Chassis-Modul (C6) montiert ist.

18. Kraftfahrzeug nach Anspruch 17, **dadurch gekennzeichnet, dass** die einzelnen Chassis-Module (C1, C2, C3, C4, C5, C6) als Tragstruktur mehrere Längsträger, Querträger und Vertikalträger aufweisen und/oder eine 3-dimensionale Tragstruktur aufweisen.

## Claims

1. Axle construction (10) for a motor vehicle, preferably a utility vehicle, and for mounting a first wheel (W1) and a second wheel (W2), wherein the axle construction (10) has a longitudinal axis (10.1) and defines a vertical reference plane (P) which extends along the longitudinal axis (10.1), having:
- a first brake cylinder (1) which has a first centre line (1.1) and which is preferably used for braking the first wheel (W1), and
- a second brake cylinder (2) which has a second centre line (2.1) and which is preferably used for braking the second wheel (W2),
**characterized in that**
- the first brake cylinder (1) is arranged at one side (S1) of the reference plane (P) and the second brake cylinder (2) is arranged at the other side (S2) of the reference plane (P).

2. Axle construction (10) according to Claim 1, **characterized in that** the first centre line (1.1) extends substantially parallel with the reference plane (P) and/or the longitudinal axis (10.1).

3. Axle construction (10) according to Claim 1, **characterized in that** the first centre line (1.1)
- is orientated to be inclined away from the reference plane (P) and/or the longitudinal axis (10.1), preferably in such a manner that a space (R1) between the first brake cylinder (1) and the axle construction (10) is increased, and/or
- extends in a non-parallel manner with respect to the reference plane (P) and/or the longitudinal axis (10.1).

4. Axle construction (10) according to one of the preceding claims, **characterized in that** the second centre line (2.1) extends substantially parallel with the reference plane (P) and/or the longitudinal axis (10.1).

5. Axle construction (10) according to one of Claims 1 to 3, **characterized in that** the second centre line (2.1)
- is orientated to be inclined toward the reference plane (P) and/or the longitudinal axis (10.1), preferably in such a manner that a space (R2) between the second brake cylinder (2) and the axle construction (10) is reduced, and/or
- extends in a non-parallel manner with respect to the reference plane (P) and/or the longitudinal axis (10.1).

6. Axle construction (10) according to one of the preceding claims, **characterized in that**
- the first centre line (1.1) and the second centre line (2.1) are orientated to be inclined away from the reference plane (P) and/or the longitudinal axis (10.1), or
- the first centre line (1.1) and the second centre line (2.1) are orientated to be inclined toward the reference plane (P) and/or the longitudinal axis (10.1).

7. Axle construction (10) according to one of the preceding claims, **characterized in that** the first centre line (1.1) and/or the second centre line (2.1) extend(s) non-vertically.

8. Axle construction (10) according to one of the preceding claims, **characterized in that** the first brake cylinder (1) and the second brake cylinder (2) are arranged in an asymmetrical manner.

9. Axle construction (10) according to one of the preceding claims, **characterized in that** the first centre line (1.1) and the second centre line (2.1)
- extend substantially parallel with each other, or
- extend non-parallel with each other and/or are orientated to be inclined through angles of different sizes.

10. Axle construction (10) according to one of the preceding claims, **characterized in that** the first brake cylinder (1) is arranged substantially completely at one side (S1) of the reference plane (P) and/or second brake cylinder (2) is arranged substantially completely at the other side (S2) of the reference plane (P).

11. Axle construction (10) according to one of the preceding claims, **characterized in that** the axle construction (10) is a drive axle construction (10), preferably an axle construction (10) which is driven electrically, hydraulically and/or by means of an internal combustion engine.

12. Axle construction (10) according to one of the preceding claims, **characterized in that** the axle construction (10) has an axle gear (G) for connecting a drive shaft for driving the motor vehicle.

13. Axle construction (10) according to one of the preceding claims, **characterized in that** the axle construction (10) has a first single-wheel motor for driving the first wheel (W1) and a second single-wheel motor for driving the second wheel (W2), wherein the first single-wheel motor is preferably arranged at one side (S1) of the reference plane (P) and/or the second single-wheel motor is arranged at the other side (S2) of the reference plane (P).

14. Axle construction (10) according to one of the preceding claims, **characterized in that** a first brake caliper (B1) is associated with the first brake cylinder (1) and a second brake caliper (B2) is associated with the second brake cylinder (2) and the first brake caliper (B1) is arranged at one side (S1) of the reference plane (P) and the second brake caliper (B2) is arranged at the other side (S2) of the reference plane (P).

15. Axle construction (10) according to one of the preceding claims, **characterized in that** the first centre line (1.1) and/or the second centre line (2.1) extend(s) in a substantially horizontal or non-horizontal manner.

16. Axle construction (10) according to one of the preceding claims, **characterized in that** the first centre line (1.1), the second centre line (2.1) and/or the longitudinal axis (10.1) extend(s) substantially at the same height.

17. Motor vehicle, preferably utility vehicle, having a chassis (100) comprising a large number of chassis modules (C1, C2, C3, C4, C5, C6) which can be releasably mounted on each other preferably by means of four connection node pairs (K) in each case, wherein an axle construction (10) according to one of the preceding claims is mounted on a chassis module (C6).

18. Motor vehicle according to Claim 17, **characterized in that** the individual chassis modules (C1, C2, C3, C4, C5, C6) have as a carrier structure a plurality of longitudinal carriers, transverse carriers and vertical carriers and/or a 3-dimensional carrier structure.

## Revendications

1. Structure d'essieu (10) pour un véhicule automobile, de préférence un véhicule utilitaire, et pour le montage d'une première roue (W1) et d'une deuxième roue (W2), la structure d'essieu (10) présentant un axe longitudinal (10.1) et définissant un plan de référence vertical (P) s'étendant le long de l'axe longitudinal (10.1), comprenant :
- un premier cylindre de frein (1) qui présente une première ligne médiane (1.1) et qui sert de préférence à freiner la première roue (W1), et
- un deuxième cylindre de frein (2) qui présente une deuxième ligne médiane (2.1) et qui sert de préférence à freiner la deuxième roue (W2),
**caractérisé en ce que**
- le premier cylindre de frein (1) est disposé d'un côté (S1) du plan de référence (P) et le deuxième cylindre de frein (2) est disposé de l'autre côté (S2) du plan de référence (P).

2. Structure d'essieu (10) selon la revendication 1, **caractérisée en ce que** la première ligne médiane (1.1) s'étend sensiblement parallèlement au plan de référence (P) et/ou à l'axe longitudinal (10.1).

3. Structure d'essieu (10) selon la revendication 1, **caractérisée en ce que** la première ligne médiane (1.1)
- est inclinée par rapport au plan de référence (P) et/ou à l'axe longitudinal (10.1), de préférence de manière à augmenter l'espace (R1) entre le premier cylindre de frein (1) et la structure d'essieu (10), et/ou
- s'étend de manière non parallèle au plan de référence (P) et/ou à l'axe longitudinal (10.1).

4. Structure d'essieu (10) selon l'une des revendications précédentes, **caractérisée en ce que** la deuxième ligne médiane (2.1) s'étend sensiblement parallèlement au plan de référence (P) et/ou à l'axe longitudinal (10.1).

5. Structure d'essieu (10) selon l'une des revendications 1 à 3, **caractérisée en ce que** la deuxième ligne médiane (2.1)
- est inclinée par rapport au plan de référence (P) et/ou à l'axe longitudinal (10.1), de préférence de manière à réduire un espace (R2) entre le deuxième cylindre de frein (2) et la structure d'essieu (10), et/ou
- s'étend de manière non parallèle au plan de référence (P) et/ou à l'axe longitudinal (10.1).

6. Structure d'essieu (10) selon l'une des revendications précédentes, **caractérisée en ce que**
- la première ligne médiane (1.1) et la deuxième ligne médiane (2.1) sont orientées de manière inclinée par rapport au plan de référence (P) et/ou à l'axe longitudinal (10.1), ou
- la première ligne médiane (1.1) et la deuxième ligne médiane (2.1) sont inclinées par rapport au plan de référence (P) et/ou à l'axe longitudinal (10.1).

7. Structure d'essieu (10) selon l'une des revendications précédentes, **caractérisée en ce que** la première ligne médiane (1.1) et/ou la deuxième ligne médiane (2.1) s'étend de manière non verticale.

8. Structure d'essieu (10) selon l'une des revendications précédentes, **caractérisée en ce que** le premier cylindre de frein (1) et le deuxième cylindre de frein (2) sont agencés de manière asymétrique.

9. Structure d'essieu (10) selon l'une des revendications précédentes, **caractérisée en ce que** la première ligne médiane (1.1) et la deuxième ligne médiane (2.1)
- s'étendent sensiblement parallèlement l'une à l'autre, ou
- s'étendent de manière non parallèle l'une à l'autre et/ou sont orientées de manière inclinée selon des angles différents.

10. Structure d'essieu (10) selon l'une des revendications précédentes, **caractérisée en ce que** le premier cylindre de frein (1) est disposé sensiblement entièrement d'un côté (S1) du plan de référence (P) et/ou le deuxième cylindre de frein (2) est disposé sensiblement entièrement de l'autre côté (S2) du plan de référence (P).

11. Structure d'essieu (10) selon l'une quelconque des revendications précédentes, **caractérisée en ce que** la structure d'essieu (10) est une structure d'essieu moteur (10), de préférence une structure d'essieu (10) entraînée électriquement, hydrauliquement et/ou par un moteur à combustion interne.

12. Structure d'essieu (10) selon l'une des revendications précédentes, **caractérisée en ce que** la structure d'essieu (10) comprend un engrenage d'essieu (G) pour le raccordement d'un arbre d'entraînement pour l'entraînement du véhicule automobile.

13. Structure d'essieu (10) selon l'une des revendications précédentes, **caractérisée en ce que** la structure d'essieu (10) comprend un premier moteur à roue unique pour entraîner la première roue (W1) et un deuxième moteur à roue unique pour entraîner la deuxième roue (W2), de préférence le premier moteur à roue unique étant disposé d'un côté (S1) du plan de référence (P) et/ou le deuxième moteur à roue unique étant disposé de l'autre côté (S2) du plan de référence (P).

14. Structure d'essieu (10) selon l'une des revendications précédentes, **caractérisée en ce qu'**un premier étrier de frein (B1) est associé au premier cylindre de frein (1) et un deuxième étrier de frein (B2) est associé au deuxième cylindre de frein (2), et le premier étrier de frein (B1) est disposé sur un côté (S1) du plan de référence (P) et le deuxième étrier de frein (B2) est disposé sur l'autre côté (S2) du plan de référence (P).

15. Structure d'essieu (10) selon l'une quelconque des revendications précédentes, **caractérisée en ce que** la première ligne médiane (1.1) et/ou la deuxième ligne médiane (2.1) s'étend/s'étendent sensiblement horizontalement ou s'étend/s'étendent de manière non horizontale.

16. Structure d'essieu (10) selon l'une des revendications précédentes, **caractérisée en ce que** la première ligne médiane (1.1), la deuxième ligne médiane (2.1) et/ou l'axe longitudinal (10.1) s'étendent sensiblement à la même hauteur.

17. Véhicule automobile, de préférence véhicule utilitaire, comportant un châssis (100) constitué d'une pluralité de modules de châssis (C1, C2, C3, C4, C5, C6) montés les uns sur les autres de manière amovible au moyen de préférence respectivement quatre paires de nœuds de raccordement (K), une structure d'essieu (10) selon l'une des revendications précédentes étant montée sur un module de châssis (C6).

18. Véhicule automobile selon la revendication 17, **caractérisé en ce que** les différents modules de châssis (C1, C2, C3, C4, C5, C6) présentent comme structure porteuse plusieurs longerons, traverses et poutres verticales et/ou présentent une structure porteuse tridimensionnelle.
